# EUROPÄISCHE PATENTSCHRIFT

(11) **EP 2 689 131 B1**
(45) Veröffentlichungstag und Bekanntmachung des Hinweises auf die Patenterteilung: **13.08.2014**
(21) Anmeldenummer: 12710128.5
(22) Anmeldetag: 22.02.2012
(51) Int. Cl.: F03D 11/00, G02B 27/00

(54) **REINIGUNGSEINRICHTUNG EINER OPTISCHEN SENSOREINRICHTUNG ZUR MESSUNG VON AERODYNAMISCHEN BELASTUNGEN EINES ROTORBLATTES EINER WINDKRAFTANLAGE**
SENSOR DEVICE FOR MEASURING AERODYNAMIC LOADS OF A ROTOR BLADE OF A WIND TURBINE
ENSEMBLE CAPTEUR POUR LA MESURE DES CHARGES AÉRODYNAMIQUES D'UNE PALE DE ROTOR D'UNE ÉOLIENNE

(30) Priorität: 19.03.2011 DE 102011014480
(43) Veröffentlichungstag der Anmeldung: 29.01.2014
(73) Patentinhaber: SSB Wind Systems GmbH & Co. KG, 48499 Salzbergen (DE)
(72) Erfinder: BERTOLOTTI, Fabio, 48455 Bad Bentheim (DE); KÖTTING, Norbert, 48485 Neuenkirchen (DE)
(86) Internationale Anmeldenummer: PCT/EP2012/000776
(87) Internationale Veröffentlichungsnummer: WO 2013/041155

(56) Entgegenhaltungen:
- EP-A1- 2 239 462
- EP-A2- 2 141 354
- DE-A1-102006 002 708
- GB-A- 2 248 014

## Beschreibung

Die Erfindung betrifft eine Sensoreinrichtung zur Messung von ae-rodynamischen Belastungen mindestens eines Rotorblattes einer Windkraftanlage entsprechend dem Oberbegriff des Anspruches 1. Die Erfindung betrifft ferner eine Windkraftanlage entsprechend dem Oberbegriff des Anspruches 13.

Durch die Zunahme der Länge und Flexibilität von Rotorblättern in Windkraftanlagen arbeitet deren Steuerung vermehrt darauf hin, während des Betriebes auftretende aerodynamische Belastungen eines oder mehrerer Rotorblätter zu messen. Belastungen oder Verformungen der Rotorblätter werden vornehmlich durch aerodynamische Kräfte hervorgerufen. Ein direktes Messen der aerodynamischen Belastungen ist aber nicht möglich. Da die Blattbiegung und deren Torsion und die Blattbelastung in einer engen Beziehung zueinander stehen, bilden Informationen über diese unerwünschten Verformungen eine gute Eingangsinformation, ob diese Verformungen z. B auf eine Fehlausrichtung der Rotorachse zu der Windrichtung oder auf vertikale oder horizontale Windscherungen zurückzuführen sind.

Die Messung der beim Betrieb auftretenden Belastungen eines Rotorblattes erfolgt meist über Sensoreinrichtungen, die in einem Hohlraum des Rotors, des Rotorblattes oder auch in einem feststehenden Maschinenhaus (Gondel) der Windkraftanlage angeordnet sind. Von einer Sig-nalquelle werden Signale zu einem im Abstand dazu angeordneten Reflektor gesendet, die dann von diesem reflektiert und zu einen ebenfalls im Abstand zum Reflektor angeordnete Empfänger gesendet werden. Im Empfänger werden die reflektierten Signale ausgewertet und ggf. über eine Recheneinheit in Messwerte umgesetzt. Empfänger und Recheneinheit werden im Folgenden als Signalauswertungseinrichtung bezeichnet.

Die durch die aerodynamischen Belastungen auftretenden räumlichen Verschiebungen von Markierungen an der Reflektoroberfläche können somit von der Signalauswertungseinrichtung detektiert und quantifiziert werden. Bei der Signalauswertungseinheit kann es sich z. B. um eine sogenannte berührungslose Abstandsmesseinrichtung in Form eines Lasers, einer Kamera oder ähnlicher Anordnungen handeln. Die Auswertungseinrichtung kann entweder im Hohlraum des Rotors, des Blattes oder sogar über geeignete Übertragungsmittel auch im feststehenden Maschinenhaus (Gondel) der Anlage angeordnet sein. Bei den Signalen kann es sich um optische, Sonare-, Laser- oder elektromagnetische Signale handeln. Bei dem Reflektor handelt es sich meist um einen sog. Retroreflektor, der symmetrisch um die Blattachse angeordnet ist und am Blatt befestigt ist.

Beispiele solcher gattungsbildenden Sensoreinrichtungen mit einem Reflektor und einer Signalauswertungseinrichtung im Hohlraum eines Rotorblattes sind in der EP 2 239 462 A2 DE (berührungslose Distanzmesseinrichtung), DE 10 2009 007 938 A1 (optischer Sensor) oder WO 2010054661 A2 (Signalauswertungseinrichtung in der Gondel) beschrieben.

Wesentlichen Einfluss auf die Genauigkeit der Messungen der oben beschriebenen Sensoreinrichtungen im Hohlraum des Rotorbereich einer Windkraftanlage haben insbesondere zwei Einflussgrößen: zum einen, die durch die aerodynamische Belastungen verursachte Bewegung der Sig-nalauswertungseinrichtungen, z. B. bei einem optischen System, wenn die Kamera auf Grund der Belastung selber Bewegungen ausführt, und zum anderen, Verschmutzungen oder Beschädigungen des Reflektors im Betrieb.

Eine mögliche Bewegung der Signalauswertungseinrichtung kann durch eine fixierte Positionierung der Einrichtung verhindert oder über eine Referenzpunktmessung kompensiert werden. Bei der Referenzpunktmessung wird über eine zusätzliche Abstandsmessung zu einem fixen Punkt (beispielsweise der Abstand zur Blattwurzel) die Bewegung der Signal-auswertungseinrichtung heraus gerechnet. In diesem Zusammenhang wird auf die Patentanmeldungen DE-A-10 2010 017 749-und DE-A-10 2011 011 392 der Anmelderin hingewiesen.

Die zweite Einflussgröße betrifft mögliche Verschmutzungen und Beschädigungen des Reflektors im Rotorbereich der Windkraftanlage. Dieser Bereich ist relativ unzugänglich. Insbesondere trifft dies für den Hohlraum eines Rotorblattes zu, der sich in Richtung Blattspitze verengt. Der Reflektor der Sensoreinrichtung ist im Abstand von der Blattwurzel in Richtung Blattspitze in diesem unzugänglicherem Hohlraum des Blattes angeordnet.

Verschmutzungen oder Beschädigungen des Reflektors werden durch Staub, Schmutzbelag oder im Rotorbereich herumfliegende gelöste Teile verursacht, die unterschiedliche Ursache aufweisen können. Es können Überreste aus der Blattfertigung sein, gelöste Maschinenteile oder sogar Werkzeuge. An der Reflektoroberfläche setzen sich im Laufe der Zeit auch Schmutzablagerungen von Maschinenöl oder andere Schmutzpartikel ab. Diese Ablagerungen verursachen eine Abweichung der ankommenden und reflektierten Signale, so dass die detektierten Signale fehlerhaft sind und Fehlmessungen registriert und quantifiziert werden.

EP-A- 2 141 354 zeigt eine Vorrichtung zur Reinigung von verschmutzten Außenflächen eines Rotorblattes einer Windkraftanlage mit einem Gestell und einer Reinigungseinrichtung, die der Außenfläche des Rotorblattes angepasst ist und mit dem Gestell verbunden ist. Die Reinigungseinrichtung ist verschiebbar auf der Rotoraußenfläche angeordnet und gleitet fest auf dieser. Die Reinigungseinrichtung kann mittels bei einer Rotordrehung auftretender Zentrifugalkraft aktiviert werden.

Es ist die Aufgabe der Erfindung bei einer Sensoreinrichtung der genannten Art eine Verschmutzung der Reflektoroberfläche und damit eine mögliche Fehlerquelle bei der Messung der aerodynamischen Belastungen zu verhindern.

Die Lösung der Aufgabe erfolgt in Zusammenhang mit dem Oberbegriff des Anspruches 1 durch dessen kennzeichnende Merkmale. Vorteilhafte Ausführungen der erfindungsgemäßen Lösung sind in den Untersprüchen angegeben.

Mit der Anordnung einer von der Drehzahl der Rotornabe abhängigen Aktivierung einer Reflektorreinigungseinrichtung für den Reflektor wird eine Möglichkeit geschaffen, während des Betriebes in regelmäßigen Abständen eine quasi automatisierte Selbstreinigung des Reflektors durchzuführen ohne die Windkraftanlage außer Betrieb zu setzen. Die Reinigungseinrichtung steuert sich quasi von selbst durch die Position der Rotorblätter. Sie kann sogar bei Stillstand der Anlage aktiviert werden, unter der Voraussetzung, dass das entsprechende Rotorblatt mit der Reinigungseinrichtung so angeordnet ist, dass durch die Erdanziehung die Reinigungseinrichtung aktivierbar ist. Die Aktivierung der Reinigungseinrichtung erfolgt bei langsam und schnell drehenden Rotorblättern durch die bei der Rotation auftretenden Zentrifugalkraft. Eine externe Steuerung der Reinigungseinrichtung ist nicht mehr erforderlich.

Mittels der Zentrifugalkraft ist die Reinigungseinrichtung bei langsam drehender Nabe aktivierbar bzw. wird aktiviert, bei schnell drehender Nabe ist sie blockierbar bzw. wird blockiert. Bei langsam drehender Rotornabe der Windkraftanlage wird keine Auswertung des Sensorsystems benötigt, da in diesem Falle die aerodynamischen Belastungen der Windkraftanlage sehr gering sind und keine Rolle spielen. Es ist daher nicht von Nachteil, dass beim Reinigen der Reflektoroberfläche durch die Reinigungseinrichtung die einfallenden oder reflektierten Signale durch den Reinigungsvorgang gestört werden. Beim schnellen Drehen der Nabe, wenn die Auswertung des Sensorsystems benötigt wird, wird die Reinigungseinrichtung außer Funktion gesetzt, so dass der Signalverlauf nicht gestört wird.

In einer ersten vorteilhaften Ausführung der Erfindung erfolgt die Aktivierung durch hydraulische oder pneumatische Drucksteigerung bei steigender Zentrifugalkraft. Die Reinigungseinrichtung umfasst in dieser Ausführung eine Sprüheinrichtung, die über eine Leitung mit einem mit Reinigungsmitteln gefüllten Vorratstank verbunden ist. Die Aktivierung kann beispielsweise dadurch erfolgen, dass bei einer bestimmten Rotorstellung, z. B. wenn die Position eines Rotorblattes oberhalb der Rotorachse ist, der Druck in der Leitung ansteigt und somit über ein Druckre-gelventil in der Leitung das Reinigungsmittel durch die Leitung auf den Reflektor gesprüht wird und diesen somit reinigt.

Unabhängig von der Ausführung der Reinigungseinrichtung mit pneumatisch oder hydraulisch aktivierter Betätigung weist der Reflektor vorteilhaft eine Refflektoroberfläche auf, die im Wesentlichen quer zum Signalverlauf angeordnet ist, und durch die Reinigungseinrichtung gereinigt wird.

Zum besseren Schutz gegen umherfliegende Schmutzteile im Rotor ist der Reflektor in Richtung der Signalauswerteinrichtung mit einer vor der Reflektoroberfläche angeordnete und die Signale nicht beeinflussende Schutzscheibe versehen. Zur Vermeidung von zusätzlichen Brechungen / Reflektionen der Signale an der Grenzfläche zwischen Schutzscheibe und Reflektoroberfläche, die das Messergebnis der Sensoreinrichtung zusätzlich verfälschen würde, wird vorgeschlagen, dass die Schutzscheibe mit der Reflektoroberfläche einen festen luftundurchlässigen Verbund bildet. Die Vermeidung der Signalbrechungen / -streuungen an den Grenzflächen zwischen der Schutzscheibe und der Reflektoroberfläche beeinflusst damit auch die Auswahl des Materials der Schutzscheibe.

Bei der Sensoreinrichtung mit der Schutzscheibe wird die in Richtung der Auswerteinrichtung weisende Oberfläche der Schutzscheibe gereinigt, d.h. die Reinigungseinrichtung ist auf der Scheibenoberfläche angeordnet.

Zum weiteren Schutz gegen mechanische Beschädigungen ist der Reflektor zusammen mit der Schutzscheibe in einem separaten Gehäuse eingebaut. Die Vorderseite des Gehäuses, die in Richtung der Auswerteinrichtung gerichtet ist, ist mit der Schutzscheibe abgedeckt. Am Rand des Gehäuses ist die Reinigungseinrichtung angeordnet, die in Abhängigkeit von der auf den Reflektor oder dem Gehäuse wirkenden Zentrifugalkraft die in Richtung der Auswertungseinrichtung angeordnete Oberfläche der Schutzscheibe reinigt.

Zur Verbesserung der Aktivierung der Reinigungseinrichtung ist es weiter vorteilhaft, wenn bei der Ausführung des Reflektors mit der Schutzscheibe diese gegenüber der Reflektoroberfläche in einer geneigten und zum Strahlengang sich öffnenden Ebene angeordnet ist.

In den bisherigen Ausführungen der Erfindung wurde vorausgesetzt dass die Reinigungseinrichtung direkt mit steigender Rotordrehzahl der Nabe aktiviert wird. Die Aktivierung der Reinigungseinrichtung kann auch vorteilhaft bei unterschiedlichen Drehzahlen aktiviert werden. Dies ist insbesondere für die exakte Messung der aerodynamischen Belastung der Rotorblätter von Bedeutung, um Messfehler durch die Aktivierung der Reinigungseinrichtung zu vermeiden, wenn der Signalverlauf durch den Reinigungsvorgang zeitweise überdeckt wird.

In einer besonders vorteilhaften Ausführung der Erfindung umfasst die Reinigungseinrichtung eine Wischereinrichtung mit einem über die Reflektoroberfläche schwenkbaren Wischerarm. Die Wischbetätigung erfolgt ausschließlich durch Rotations- und Beschleunigungskräfte am Reflektor, so dass eine mit der übergeordneten Windkraftanlagensteuerung gekoppelte zusätzliche Betätigungseinrichtung für die Reinigungseinrichtung entfallen kann. Die Wischeinrichtung ist so konzipiert, dass bei langsam drehender Rotornabe, wenn in diesem Fall die Erdanziehungskraft überwiegt, der Wischerarm durch die Erdanziehungskraft aktiviert wird und bei schnell drehender Nabe, wenn die nach außen wirkende Zentrifugalkraft überwiegt, der Wischerarm gegen einen am seitlichen Rand der Reflektoroberfläche angeordnete Anschlag gedrückt wird, blockiert ist und somit in seine Ausgangs- und Ruhestellung verbleibt, um den Signalgang der einfallenden und reflektierten Signale nicht durch Wischbewegungen auf der Reflektoroberfläche zu überdecken und damit die Messwerte zu verfälschen.

Der Wischerarm weist vorteilhaft eine in Richtung der Reflektoroberfläche weisende Wischlippe in Form z. B. eines Filzbelages auf, wobei der Wischerarm von der Ausgangstellung in einer Wischstellung über die Reflektoroberfläche schwenkbar bzw. geschwenkt wird. Die Betätigung des Wischerarmes beim langsamen Drehen der Nabe erfolgt in eine oberhalb der Nabenachse der Windkraftanlage gelegene Winkelstellung eines Rotorblattes durch die am Wischerarm angreifende Schwerkraft. Der Wischerarm bewegt sich von der Ausgangsstellung in die Wischposition und streicht über die Reflektoroberfläche, die bei diesem Vorgang von Schmutzpartikel gereinigt wird. Erreicht das Rotorblatt hingegen beim weiteren (langsamen) Drehen der Nabe eine unterhalb der Rotorachse gelegene Winkelposition, so erfolgt eine Schwenkbewegung zurück in die Ausgangsstellung des Wischerarmes. Bei jeder vollen Drehung des Rotorblattes um 360° erfolgt somit jeweils eine Schwenkbewegung des Wischerarmes über die Reflektoroberfläche. Die bei diesem Vorgang überdeckenden Signalverläufe sind aber für die Messung der aerodynamischen Belastung ohne Relevanz, da sie in diesem Drehzahlbereich vernachlässigbar klein ist.

Zur besseren Aktivierung der Wischereinrichtung durch die Schwerkraft, ist die Reflektoroberfläche, wie bei der vorher beschriebenen Ausführung vorzugsweise schräg zu einem Querschnittsprofil des Rotorblattes angeordnet mit einem zur Blattachse sich öffnenden Winkel. Der Wischerarm kann dabei so durch Gewichte oder ähnliche Maßnahmen eingestellt werden, dass die Wischerlippe bei jeder Schwenkbewegung immer auf der Reflektoroberfläche anliegt.

Bei schnell drehender Rotornabe und der dort befestigten Rotorblätter, wenn die Auswertungen des Sensorsystems benötigt werden, wird die am Wischerarm angreifende Schwerkraft durch die in Richtung der Blattspitze wirkende Zentrifugalkraft dominiert. Durch diese Kraft wird der seitlich an der Reflektoroberfläche gelagerte Wischerarm immer nach außen gegen einen Anschlag gedrückt und verbleibt somit in seiner Ausgangs- oder Ruheposition. Die Reflektoroberfläche wird nicht überdeckt, die einfallende und reflektierten Signale werden nicht beeinflusst und die Messung der aerodynamischen Belastung der Anlage bei starken Wind oder einer Windböe nicht beeinträchtigt.

Bei der Ausführung der Reinigungseinrichtung als Wischereinrichtung sind für die Ausführung des Reflektors die gleichen Ausführungsformen anwendbar, wie bei der oben schon erwähnten Ausführung mit der Sprüheinrichtung. So kann der Reflektor in einem Gehäuse angeordnet sein, das mit einer Schutzscheibe in Richtung der Auswerteinrichtung versehen ist. Am Rand des Gehäuses oder der Schutzscheibe ist dann die Wischereinrichtung angeordnet, wobei der Wischerarm in dieser Ausführung über die Schutzscheibe wischt.

Zur Verbesserung der Schwenkbewegung des Wischerarmes ist es weiter vorteilhaft, wenn bei der Ausführung des Reflektors mit der Schutzscheibe diese gegenüber der Reflektoroberfläche in einer geneigten und zum Strahlengang sich öffnenden Ebene angeordnet ist. Diese Anordnung verhindert bei hoher am Reflektor angreifender Zentrifugalkraft - also bei hoher Rotordrehzahl - eine in diesem Bereich ungewollte Aktivierung des Wischerarmes. Bei niedriger Rotordrehzahl und Wirksam werden der Schwerkraft wird dadurch ein ungewolltes Blockieren des Wischerarmes verhindert.

Die Erfindung betrifft ferner eine Windkraftanlage mit einem durch Wind um eine Rotorachse drehbaren Rotor, der eine Rotornabe und wenigstens ein an der Rotornabe befestigtes und sich von dieser in Richtung einer im wesentlichen quer zur Rotorachse verlaufenden Rotorblattes umfasst, wenigstens einen elektrischen Generator, der mit dem Rotor mechanisch gekoppelt ist und von diesem antreibar ist, wobei die Windkraftanlage eine Sensoreinrichtung eine Reinigungseinrichtung aufweist in allen oben erwähnte erfinderischen Ausführungen, die in einer solchen Anlage integriert ist und welche die durch Wind und Wetter erzeugten aerodynamischen Belastungen der Rotorblätter ermittelt.

Weitere vorteilhafte Ausführungen der Erfindung ergeben sich aus zwei in der Zeichnung dargstellten Ausführungsbeispiele der Erfindung
Fig.1 zeigt eine schematische Ansicht einer Windkraftanlage.
Fig. 2 zeigt eine allgemeine schematische und teilweise Darstellung eines Rotors der aus Fig. 1 ersichtlichen Windkraftanlage mit einer Sensoreinrichtung für die Verformung eines Rotorblattes einer Windkraftanlage.
Fig.3 zeigt in einer perspektivischen Darstellung den Rotor der Windkraftanlage mit schematisch angeordneten Reflektoren der Sensoreinrichtung für jedes Rotorblatt bei schnell drehender Nabe.
Fig. 4a und Fig. 4b zeigen in perspektivischer Darstellung eine erste Ausführung der Reinigungseinrichtung eines Reflektors der Windkraftanlage.
Fig. 5a und 5b zeigen in einer schematischen Darstellung die Wirkungsweise der Reinigungseinrichtung nach Fig. 4a und Fig. 4b bei hoher und niedriger Rotordrehzahl der Windkraftanlage .
Fig. 6 zeigt in einer schematischen Darstellung eine zweite Ausführung der Reinigungseinrichtung des Reflektors der Windkraftanlage.

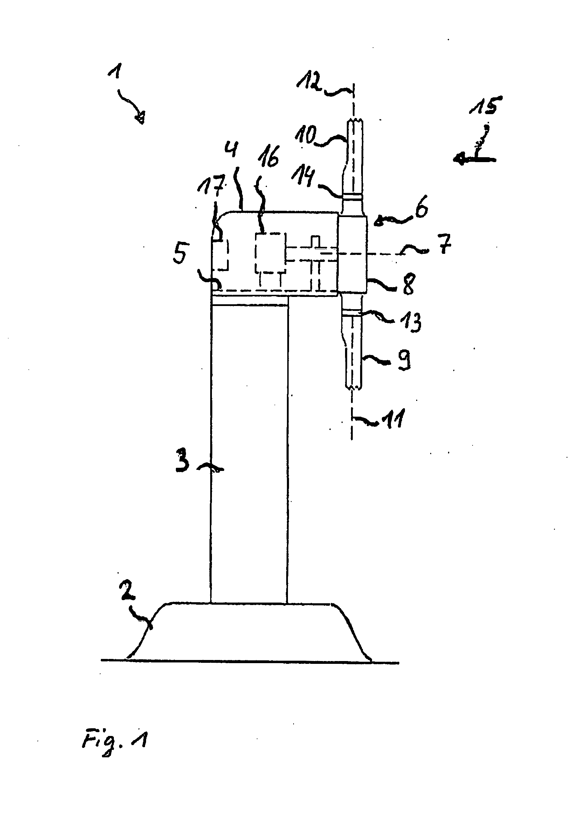

Aus Fig. 1 ist eine Windkraftanlage 1 ersichtlich, wobei ein auf einem Fundament 2 aufstehender Turm 3 an seinem dem Fundament 2 abgewandten Ende mit einem Maschinenhaus 4 verbunden ist. In dem Maschinenhaus 4 ist ein Maschinenträger 5 angeordnet, an dem ein Rotor 6 um eine Rotorachse 7 drehbar gelagert ist, der eine Rotornabe 8 und damit verbundene Rotorblätter 9 und 10 aufweist, die jeweils um ihre Blattachsen 11, 12 relativ zur Rotornabe 8 drehbar sind. Jedes Rotorblatt 9, 10 ist mit einem Verstellantrieb 13, 14 mechanisch gekoppelt, mittels welchem das jeweilige Rotorblatt 9, 10 um die zugehörige Blattachse 11,12 gedreht und mechanisch mit einem elektrischen Generator 16 gekoppelt ist, der in dem Maschinenhaus 4 angeordnet und an dem Maschinenträger 5 befestigt ist und die auf die einzelnen Rotorblätter wirkende Windkraft 15 zum größten Teil in elektrische Energie umwandelt. Für den kontrollierten Betrieb der Windkraftanlage 1 ist eine übergeordnete Windkraftanlagensteuerung 17 vorgesehen, mittels welcher unter anderem die Verstellantriebe 13, und14 gesteuert werden.

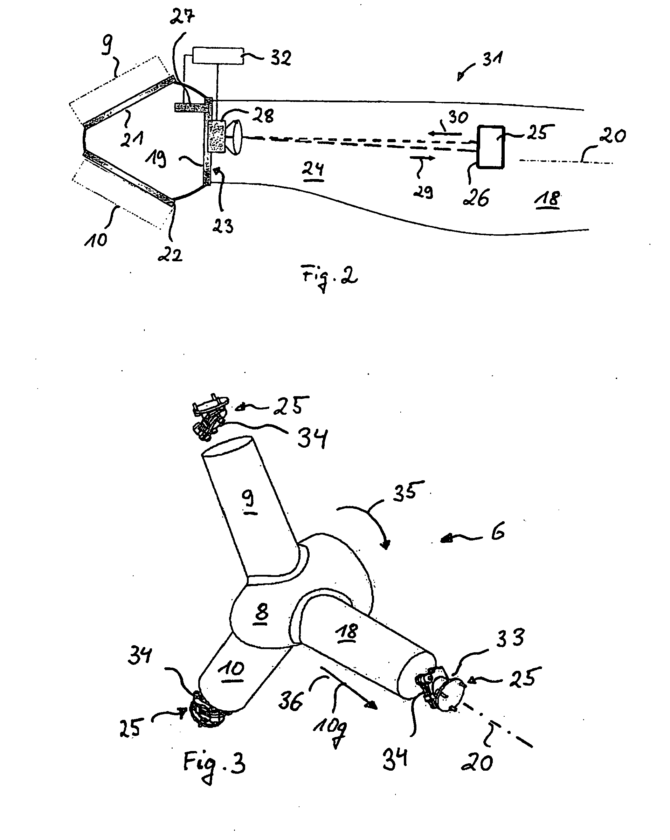

Fig. 2 zeigt eine schematische und teilweise Darstellung des Rotors 6 in Blickrichtung aus Fig. 1, wobei an der Rotornabe 8 ein drittes Rotorblatt 18 mittels eines Blattlagers 19 drehbar gelagert ist. Die Rotorblätter 9 und 10 weisen ebenfalls Blattlager 21 und 22 auf, wie aus Fig. 2 ersichtlich ist. In Fig. 1 ist das Rotorblatt 18 durch die Rotornabe 8 verdeckt. Wie die Rotorblätter 9 und 10 ist auch das Rotorblatt 18 mit einem schematisch angedeuteten Blattwinkelverstellantrieb 27 mechanisch gekoppelt und mittels diesem um die Blattachse 20 drehbar.

Fig. 2 zeigt ferner eine Sensoreinrichtung 31 für die Messung der Verformung des Rotorblattes der Windkraftanlage 1, die ganz oder teilweise in dem Rotor 6 integriert ist. Mittels der Einrichtung 31 wird eine aerodynamische Belastung des Rotorblattes 18 gemessen. Das am Blattlager 19 befestigte Ende des Rotorblattes 18 wird als Blattwurzel 23 bezeichnet.

Die Sensoreinrichtung 31 umfasst einen in einem Hohlraum 24 des Rotorblattes 18 angeordneten Reflektor 25, der im Abstand zur Blattwurzel 23 ankommende Signale von einer Signalauswertungseinrichtung 28 empfängt und an seiner dem ankommenden Signal zugewandten Oberfläche 26 diese reflektiert und an die Auswertungseinrichtung 28 zurück sendet. Die Auswerteinrichtung 28 ist im Bereich des Blattlagers 19 angeordnet und weist einen zur Blattwurzel 23 festen Bezugspunkt auf. Damit wird verhindert, dass mögliche Bewegungen der Auswerteinrichtung auf die Messung der Verformung des Rotorblattes 18 Einfluss nehmen.

In Fig. 2 sind die von der Signalauswertungseinrichtung 28 von links nach rechts ausgehenden Signale mit einem Pfeil mit dem Bezugszeichen 29 versehen, und die von der Reflektoroberfläche 26 nach links zurück zur Auswertungseinrichtung 28 abgehenden reflektierten Signale mit dem Bezugszeichen 30 gekennzeichnet. Das auf den Reflektor 25 auftreffende Signal erzeugt auf dessen Oberfläche 26 eine Markierung. Durch die aerodynamische Belastung wird das Blatt 18 verformt, wobei sich die Verformung in einer Verschiebung der Markierung auf der Reflektoroberfläche 26 auswirkt. Diese Verschiebung wird in der Signalauswertungseinrichtung 28 registriert.

Die Signalauswertungseinrichtung 28 ist zusätzlich mit einer Rechen- und Signalverarbeitungseinheit 32 verbunden, welche die reflektierten Signale 30 zusätzliche quantifiziert und in Messgrößen umformt. Die Signalverarbeitungseinheit 32 ist ferner mit dem Verstellantrieb 27 verbunden. Des weiteren besteht eine nicht dargstellte Verbindung zu der Windkraftanlagensteuerung 17. Die ermittelten Werte der Rechen- und Signalverarbeitungseinheit 32 bilden somit Stellgrößen für den Blattverstellantrieb 27 oder für andere Betriebsparameter der Windkraftanlage 1.

Die in dem Ausführungsbeispiel nach Fig. 2 erwähnte Sensoreinrichtung 31 arbeitet auf der Basis eines optischen Systems, bei dem die Signale 29, 30 Lichtstrahlen sind, die von einer Lichtquelle ausgehen, die Teile der oben erwähnten Signalauswertungseinrichtung 28 sind. Das optische System umfasst kamerabasierte Systeme oder Laseranordnungen. Die von einer Lichtquelle erzeugten Strahlen (Signale) erzeugen auf dem Reflektor 25 eine Lichtmarkierung, die sich durch die Blattverformung räumlich auf der Reflektoroberfläche 26 verschiebt. Die verschobene Markierung wird über den reflektierten Lichtstrahl 30 in der Signalauswertungseinrichtung 28 registriert. Die Daten der Verformung werden dann in der Rechen- und Signalverarbeitungseinrichtung 32 in Messgrößen umgeformt.

Anstelle des oben erwähnten optischen Systems können auch nicht leitungsgebundene elektromagnetische oder sonare Systeme verwendet werden, die über eine entsprechende Sende-/ Empfängereinheit und einem entsprechend ausgestalteten Reflektor verfügen.

Fig.3 zeigt in einer perspektivischen Darstellung die Rotation 35 des Rotors 6 der Windkraftanlage 1 mit schematisch angeordneten Reflektoren 25 für jedes Rotorblatt 9, 10 und 18 bei schnell drehender Nabe 8. Da die Reflektoren in den Rotorblättern 9 und 10 gleich sind wie im Rotorblatt 18, sind sie auch mit den gleichen Bezugszeichen versehen wie der Reflektor 25 im Blatt 18 der Fig. 2.

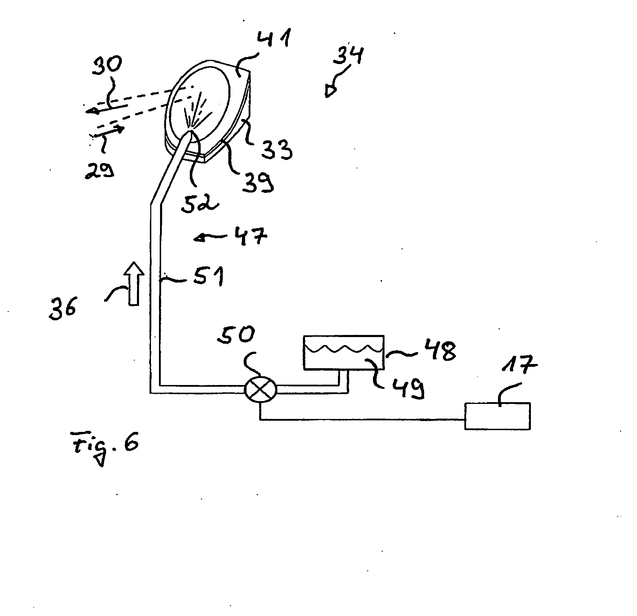

Der Reflektor 25 ist von einem Gehäuse 33 (siehe auch Fig. 6) umgeben, um mechanische Beschädigungen durch gelöste, herumfliegende Teile im Hohlraum 23 des Rotorblattes 9, 10, 18 zu vermeiden. Die in Richtung der Auswerteinheit 28 weisende Reflektoroberfläche 26 ist quer zur Blattachse 20 angeordnet und weist zur Verhinderung von Schmutzablagerungen auf der Oberfläche 26 eine Reinigungseinrichtung 34 auf, die in der weiteren Figurenbeschreibung noch näher erläutert wird. Bei schnell drehendem Rotor 6 - z. B verursacht durch starken Wind oder einer kurzzeitig auftretenden Windbö - wirken auf jeden Reflektor 25 eine Zentrifugalbeschleunigung 36 von ca. 10 g mit g = 9,81 m/s² (Erdanziehungskraft).

Die Reinigungseinrichtung 34 ist in einer ersten Ausführung so konzipiert, dass sie in bei hoher Drehzahl des Rotors außer Funktion ist, da in diesem Drehzahlbereich Biegungen des jeweiligen Rotorblattes 9, 10, 18 auftreten. Eine Aktivierung der Reinigungseinrichtung 34 in diesem Drehzahlbereich würde die Verformungsmessung und damit die Messung der aerodynamischen Belastungen der Windkraftanlage 1 stören.

Anders hingegen bei langsam drehender Rotornabe 8. In diesem Fall wirkt auf den jeweiligen Reflektor 25 nur die durch die me" Drehung wirksame Erdanziehungskraft g. Da in diesem Bereich so gut wie keine aerodynamischen Belastungen auftreten, die gemessen werden können, ist in diesem Rotordrehzahlbereich die Reinigungseinrichtung 34 aktiviert. Störungen des Signalverlaufes der ankommenden und reflektierten Signale durch den Reinigungsvorgang des Reflektors sind für die aerodynamischen Belastungen ohne Relevanz.

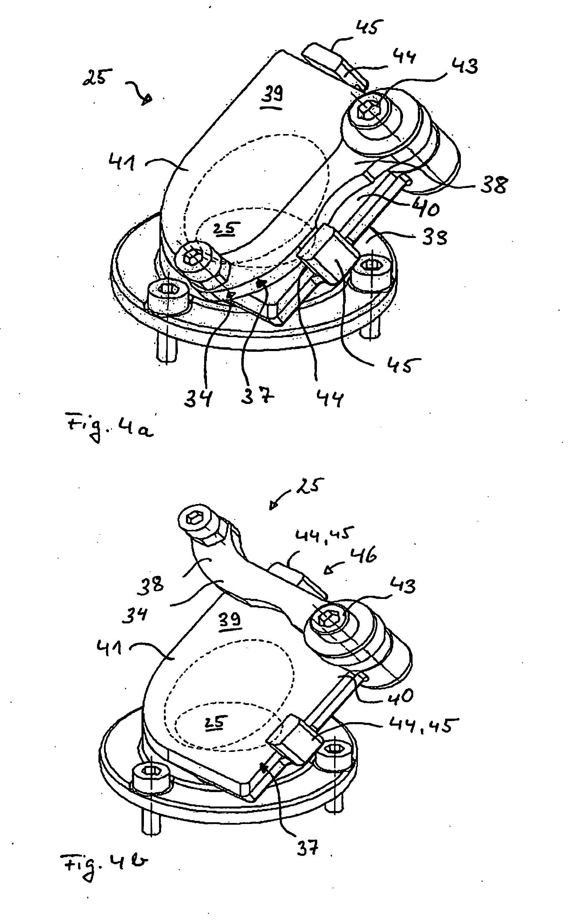

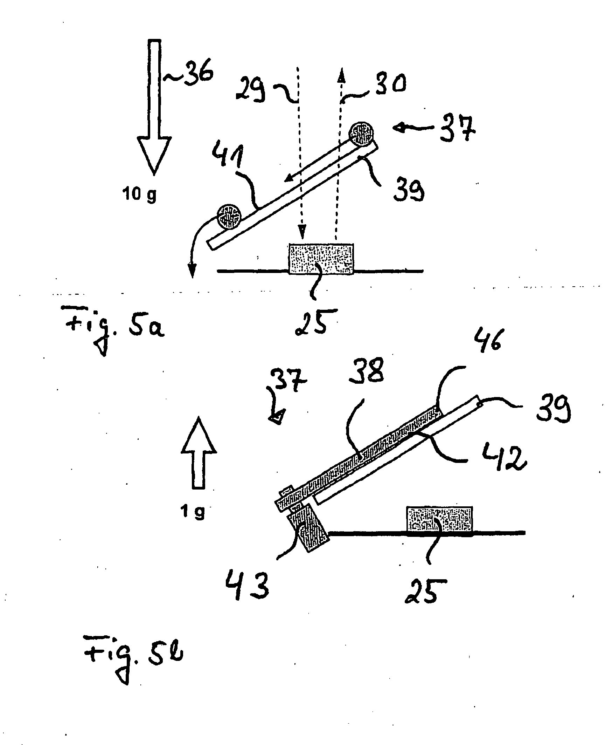

In den Figuren 4a und Fig. 4b ist die erste Ausführungsform der Reinigungseinrichtung 34 des Reflektors 25 im Detail dargestellt. Sie ist als Wischereinrichtung 37 mit einem Wischerarm 38 ausgeführt, der am rechten Seitenrand 40 des Schutzgehäuses 33 schwenkbar gelagert ist. Als weiterer Schutz gegenüber umherfliegender Teile ist die der Signalauswertungseinrichtung 28 zugewandte Oberfläche des Gehäuses 33 mit einer Schutzscheibe 39 versehen, die gegenüber der Reflektoroberfläche 26 und der Signaleinrichtung der ankommenden und reflektierten (Licht) Signalen 29, 30 in einer geneigten und zum Strahlengang sich öffnenden Ebene angeordnet ist (siehe Fig.5). Die Schutzscheibe 39 bildet mit der Reflektoroberfläche 26 einen festen luftundurchlässigen Verbund, damit die ankommenden und abgehenden Signale 29, 30 nicht verfälscht werden. In einer Mulde im Gehäuseinneren und von der Schutzscheibe 39 abgedeckt ist der Reflektor 25 angeordnet.

Der Wischerarm 38 weist an seiner zur Schutzscheibenoberfläche 41 gerichteten Seite eine Dichtlippe 42 (siehe Fig. 5a) auf, die aus einer Filzbeschichtung besteht und über die Scheibenoberfläche 41 wischt. In Fig. 4 a ist die Ausgangs- oder Ruhestellung des Wischerarmes 38 dargstellt. Die Lagerstelle 43 des Wischerarmes 38 ist am (rechten) Rand des Gehäuses 33 angeordnet. Der Arm 38 schwenkt von der der in Fig. 4a dargestellten Ausgangs- oder Ruhestellung durch die langsame Drehung des Rotorblattes 9,10, 18 um die Rotorachse 7 (Fig. 3) im Uhrzeigersinn in die in Fig. 4b dargestellte Wischstellung 46, wobei durch diesen Vorgang die Schutzscheibenoberfläche 41 gereinigt wird. Bei einer weiteren Rotordrehung erfolgt dann wiederum durch die Schwerkraft g die Rückbewegung zur Ruhe- oder Ausgangsstellung gemäß Fig. 4a. Die Wischereinrichtung 37 weist an den jeweiligen Ausgangs- und Ruhepositionen des Wischerarmes 38 gemäß Fig. 4a (unten) und Fig. 4b (oben) jeweils einen Stopper 44 auf, die in der Art einer senkrecht zur Schutzscheibenoberfläche 41 gerichteten Anschlages 45 ausgebildet sind.

Da der Wischvorgang im Bereich niedriger Rotordrehzahl durchgeführt wird, ist die Verformung des betreffenden Rotorblattes so gering, dass keine Messung der aerodynamischen Belastung erforderlich ist. Eine Überdeckung des Signalverlaufes 29, 30 und damit eine mögliche Verfälschung des Messergebnisses durch den Wischvorgang ist daher ohne Relevanz.

Fig. 5a und Fig. 5b zeigen schematisch die Wirkungsweise der Wischeinrichtung 37 bei hoher Drehzahl (Fig. 5a) und niedriger Drehzahl (Fig. 5b). Aus Fig. 5a ist ersichtlich, dass bei hoher Drehzahl im Wesentlichen die Zentrifugalkraft 36 wirkt, die den Wischerarm 38 in die Ruhe- oder Ausgangsstellung nach außen an den Gehäuserand 40 drückt. Der Wischerarm 38 wird nach außen gegen den oberen bzw. untern Stopper 44 oder Anschlag 45 gedrückt, wie dies in Fig. 4a und 4b dargestellt ist. Die Wischeinrichtung 37 ist nicht aktiv und verdeckt den Reflektor 25 nicht.

Fig. 5b zeigt die Wirkungsweise der Wischereinrichtung 37 bei niedriger Rotordrehzahl in der Wischstellung, in der Stellung also, in welcher der Wischerarm 38 gerade über die Scheibenoberfläche 41 wischt und sie von Schmutzpartikeln reinigt. Da keine Sensorauswertung der Blattverformung benötigt wird, hat die Reinigungsfunktion des Wischens auf das Messergebnis der Sensoreinrichtung 31 keinen Einfluss.

Fig. 6 zeigt in einer schematischen Darstellung eine zweite Ausführung der Reinigungseinrichtung des Reflektors 25 der Windkraftanlage 1. Die Reinigung des Reflektors 25, bzw, der Reflektoroberfläche oder der Schutzscheiben 39 erfolgt bei dieser Ausführung über eine Sprüheinrichtung 47, die mittels einer Aktivierungseinrichtungseinrichtung 50 aktiviert wird, wobei die Aktivierung durch hydraulische oder pneumatische Drucksteigerung bei steigender Drehzahl und damit höherer Zentrifugalkraft (36) erfolgt. Die Aktivierungseinrichtung 50 ist mit der Windkraftanlagensteuerung verbunden, welche über Drehzahlmesser die Rotordrehzahl überwacht und steuert. Die Reinigung des Reflektors 25, bzw der Reflektoroberfläche 26 oder der Schutzscheibenoberfläche 41 erfolgt über eine Sprüheinrichtung 47.

Über die Aktivierungseinrichtung 50 wird in Abhängigkeit der wirksamen Zentrifugalkraft 36, d. h. in Abhängigkeit der Rotordrehzahl, ein Reinigungsmittel 49, welches in einem im Rotor angeordnetem Tank 48 bevorratet wird, über eine Leitung 51 und einer am Rand des Reflektors angeordnete Austrittsdüse 52 auf die entsprechende Oberfläche des Reflektors gesprüht und diese somit gereinigt. Als Aktivierungseinrichtung kann beispielsweise ein mit der Windkraftanalagensteuerung 17 gekoppeltes Druckregelventil eingesetzt werden. Bei entsprechender Rotordrehzahl steigt der durch Zentrifugalkraft erzeugte Druck in der Leitung 51, so dass über das Druckregelventil das Reinigungsmittel 49 über die Leitung 51strömt und über die Austrittsdüse 52 auf die Scheibenoberfläche39 verteilt wird.

Die in Fig. 6 dargestellte Ausführungsform der Reinigungseinrichtung kann zusätzlich noch mit einer Wischereinrichtung entsprechend Fig. 4a und Fig. 4b versehen werden, um zu einem besseren Reinigungsergebnis zu gelangen. Des Weiteren kann umgekehrt die in Fig. 4a und Fig.4b dargestellte Wischereinrichtung zusätzlich mit einer Sprüheinrichtung gemäß Fig. 6 versehen werden.

Es ist für den Fachmann naheliegend, die Aktivierung der Reinigungseinrichtung in Abhängigkeit von der Rotordrehzahl auch bei Sensoreinrichtungen vorzusehen, die in anderen Bauteilen der Windkraftanlagen angeordnet sind, wenn z. B. die Auswerteinrichtung für die reflektierenden Signale nicht in dem Rotor, sondern in dem feststehenden Maschinenhaus (Gondel), dem Turm oder in einem anderen Bauteil der Anlage angeordnet sind.

Des Weiteren umfasst der in de Beschreibung verwendete Begriff des "Signals" alle möglich nicht leitungsgebundenen Signale wie optische Strahlen, inklusive Laserstrahlen (LIDAR Systeme), elektromagnetische und sonare Signale (SODAR Systeme).

## Patentansprüche

1. Sensoreinrichtung zur Messung von aerodynamischen Belastungen eines Rotorblattes (9, 10, 18) einer Windkraftanlage (1), welches mit seiner Blattwurzel (23) an einer Rotornabe (8) eines Rotors (6) befestigt ist, mit mindestens einem in einem Hohlraum (24) des Rotorblattes (9, 10, 18) angeordnete Reflektor (25), der über ein Signal (29, 30) mit einer im Abstand zum Reflektor (25) angeordnete Signalauswertungseinrichtung (28) gekoppelt ist, mittels welcher aus dem reflektierten Signal (30) physikalischen Veränderungen des Rotorblattes (9, 10, 18) ermittelt und quantifiziert werden,
**gekennzeichnet durch** eine am Reflektor (25) angeordnete Reinigungseinrichtung (34) für den Reflektor (25), die mittels der bei der Rotordrehung auftretenden Zentrifugalkraft (36) aktivierbar ist bzw. aktiviert wird und den Reflektor (25) reinigt, wobei die Reinigungseinrichtung (34) bei langsam drehender Nabe (8) aktivierbar ist bzw. aktiviert wird, und bei schnell drehender Nabe (8) blockierbar bzw. blockiert wird.

2. Sensoreinrichtung nach Anspruch 1, **dadurch gekennzeichnet, dass** die Reinigungseinrichtung (34) mittels einer Aktivierungseinrichtungseinrichtung (50) aktiviert wird, wobei die Aktivierung durch hydraulische oder pneumatische Drucksteigerung bei steigender Zentrifugalkraft (36) erfolgt,

3. Sensoreinrichtung nach Anspruch 1 oder 2, **dadurch gekennzeichnet, dass** die Reinigungseinrichtung (34) eine Sprüheinrichtung (47) mit einen mit Reinigungsmittel (49) gefüllten Vorratstank (48), eine auf Druck reagierenden Aktivierungseinheit (50), einer Leitung (51) zum Transport des Reinigungsmittels (49) zu einer am Sensor angeordneten Austrittsdüse (52) umfasst.

4. Sensoreinrichtung nach einem oder mehreren der vorherigen Ansprüche, **dadurch gekennzeichnet, dass** der Reflektor (25) eine Reflektoroberfläche (26) aufweist, die im Wesentlichen quer zum Signalverlauf (29, 30) angeordnet ist, und durch die Reinigungseinrichtung (34) gereinigt wird.

5. Sensoreinrichtung nach einem oder mehreren der vorherigen Ansprüche, **dadurch gekennzeichnet, dass** der Reflektor (25) in Richtung der Signalauswerteinrichtung (28) eine vor der Reflektoroberfläche (26) angeordnete und die Signale (29, 30) nicht beeinflussende Schutzscheibe (39) umfasst, deren in Richtung der Signalauswertungseinrichtung (28) weisende Oberfläche (41) von der Reinigungseinrichtung (34) gereinigt wird, wobei die Schutzscheibe (39) mit der Reflektoroberfläche (26) einen festen luftundurchlässigen Verbund bildet und der Reflektor (25) und die Schutzscheibe (39) in einem Gehäuse (33) angeordnet sind.

6. Sensoreinrichtung nach Anspruch 5, **dadurch gekennzeichnet, dass** die Schutzscheibe (39) eine in Richtung der Auswertungseinrichtung (28) angeordnete Abdeckung des Gehäuses (33) bildet und die Reinigungseinrichtung (34) auf der in Richtung der Auswertungseinrichtung (28) weisenden Oberfläche (41) der Schutzscheibe (39) angeordnet ist.

7. Sensoreinrichtung nach einem oder mehreren der vorherigen Ansprüche, **dadurch gekennzeichnet, dass** die Schutzscheibe (39) gegenüber der Reflektoroberfläche (26) in einer geneigten und in Richtung der Signalverläufe (29, 30) sich öffnenden Ebene angeordnet ist.

8. Sensoreinrichtung nach einem oder mehreren der vorherigen Ansprüche, **dadurch gekennzeichnet, dass** die Reinigungseinrichtung (34) eine Wischereinrichtung (37) mit einem über die Reflektoroberfläche (26, 41) schwenkbaren Wischerarm (38) umfasst, der mittels der Drehung (35) der Rotornabe (8) aktivierbar ist bzw. aktiviert wird.

9. Sensoreinrichtung nach Anspruch 8, **dadurch gekennzeichnet, dass** der Wischerarm (38) eine in Richtung der Reflektoroberfläche (26, 41) weisende Dichtlippe (42) aufweist, wobei der Wischerarm (38) von einer Ausgangstellung in einer Wischstellung (46) über die Reflektoroberfläche (26, 41) schwenkbar bzw. geschwenkt wird, und in der Ausgangsstellung an einem seitlichen Rand (40) der Reflektoroberfläche (26, 41) angeordnet ist.

10. Sensoreinrichtung nach Anspruch 8 oder 9, **dadurch gekennzeichnet, dass** der Wischerarm (38) nur bei langsam drehender Nabe (8) über die Reflektoroberfläche (26, 41) wischt und bei schnell drehender Nabe (8) in die Ausgangsstellung verbleibt.

11. Sensoreinrichtung nach einem oder mehreren der Ansprüche bis 10, **dadurch gekennzeichnet, dass** bei hoher am Reflektor (25) angreifender Zentrifugalkraft (36) der Wischerarm (38) in die Ausgangsstellung verbleibt und bei niedriger Rotordrehzahl die Wischbetätigung mittels der am Reflektor durch die Drehung (35) des Rotorblattes wirksame Schwerkraft (g) erfolgt.

12. Sensoreinrichtung nach einem oder mehreren der Ansprüche 8 bis 11, **dadurch gekennzeichnet, dass** der Wischerarm (38) in seiner Ausgangstellung an einem seitlichen Rand der Oberfläche der Schutzscheibe oder des Gehäuses (33) gelagert ist und in der Wischstellung (46) über die Schutzscheibenoberfläche (41) schwenkt.

13. Windkraftanlage mit einem durch Windkraft (15) um eine Rotorachse (7) drehbaren Rotor (6) der eine Rotornabe (8) und wenigstens ein an der Rotornabe (8) befestigtes und von dieser in Richtung einer im wesentlichen quer zur Rotorachse (7) verlaufenden Rotorblattes (8, 9, 18) umfasst, wenigstens einen elektrischen Generator, der mit dem Rotor mechanisch gekoppelt ist und von diesem antreibar ist **gekennzeichnet durch** eine Sensoreinrichtung (31) nach einem oder mehreren der vorherigen Ansprüche.

## Claims

1. Sensor device for measuring aerodynamic loads of a rotor blade (9, 10, 18) in a wind power plant (1) which is fastened by its blade root (23) to a rotor hub (8) of a rotor (6), with at least one reflector (25) arranged in a cavity (24) of the rotor blade (9, 10, 18), which is coupled by a signal (29, 30) to a signal evaluating device (28) arranged at a distance from the reflector (25), by means of which physical changes of the rotor blade (9, 10, 18) are determined and quantified on the basis of the reflected signal (30),
**characterized by** a cleaning device (34) for the reflector (25) arranged at the reflector (25) which can be / is activated by the centrifugal force (36) occurring on rotation of the rotor, and cleans the reflector (25), whereby the cleaning device (34) can be / is activated when the hub (8) is rotating at slow speed and can be / is blocked when the hub (8) is rotating at fast speed.

2. Sensor device in accordance with claim 1, **characterized in that** the cleaning device (34) is activated by means of an activation device (50), whereby activation takes place by an increase in hydraulic or pneumatic pressure with rising centrifugal force (36).

3. Sensor device in accordance with claims 1 or 2, **characterized in that** the cleaning device (34) encompasses a spray device (47) and storage tank (48) filled with cleaning agent (49), an activation unit (50) which responds to pressure, a pipe (51) to transport the cleaning agent (49) to an outlet nozzle (52) arranged at the sensor.

4. Sensor device in accordance with one or more of the previous claims, **characterized in that** the reflector (25) has a reflector surface (26) arranged substantially transversely to the signal path (29, 30) and is cleaned by the cleaning device (34).

5. Sensor device in accordance with one or more of the previous claims, **characterized in that** the reflector (25) encompasses a protective shield (39) arranged in front of the reflector surface (26) in the direction of the signal evaluating unit (28), which does not influence the signals (29, 30) and whose surface (41) facing towards the signal evaluating unit (28) is cleaned by the cleaning device (34), whereby the protective shield (39) and the reflector surface (26) form a solid air-tight bond and the reflector (25) and protective shield (39) are arranged in a housing (33).

6. Sensor device in accordance with claim 5, **characterized in that** the protective shield (39) forms a cover of the housing (33) arranged in the direction of the evaluating unit (28) and the cleaning device (34) is arranged on the surface (41) of the protective shield (39) which points towards the evaluating unit (28).

7. Sensor device in accordance with one or more of the previous claims, **characterized in that** the protective shield (39) is arranged on an angled plane opposite the reflector surface (26) which opens up in the direction of the signal path (29, 30).

8. Sensor device in accordance with one or more of the previous claims, **characterized in that** the cleaning device (34) encompasses a wiper device (37) with a wiper arm (38) which can be swivelled across the reflector surface (26, 41) and can be / is activated by means of rotation (35) of the rotor hub (8).

9. Sensor device in accordance with claim 8, **characterized in that** the wiper arm (38) has a sealing lip (42) pointing in the direction of the reflector surface (26, 41), whereby the wiper arm (38) can be / is swivelled from a starting position to a wiping position (46) over the reflector surface (26, 41), and in its starting position is arranged at a side edge (40) of the reflector surface (26, 41).

10. Sensor device in accordance with claims 8 or 9, **characterized in that** the wiper arm (38) only wipes over the reflector surface (26, 41) when the hub (8) is rotating at low speed, and remains in the starting position when the hub (8) is rotating at high speed.

11. Sensor device in accordance with one or more of claims 8 to 10, **characterized in that** the wiper arm (38) remains in the starting position when a high centrifugal force (36) is applied at the reflector (25), and at low rotor speeds wiping actuation takes place as a result of the gravity (g) occurring at the reflector due to rotation (35) of the rotor blade.

12. Sensor device in accordance with one or more of claims 8 to 11, **characterized in that** the wiper arm (38) rests at a side edge of the surface of the protective shield or of the housing (33) in its starting position, and in the wiping position (46) swivels over the surface of the protective shield (41).

13. Wind power plant with a rotor (6) capable of rotating by means of wind power (15) around a rotor axle (7) which encompasses a rotor hub (8) and at least one rotor blade (8, 9, 18) running largely transversely to the rotor axle which is fastened to the rotor hub (8), at least one electrical generator which is mechanically coupled to the rotor and may be driven by it, **characterized by** a sensor device (31) in accordance with or more of the prior claims.

## Revendications

1. Dispositif à capteur pour mesurer les charges aérodynamiques d'une pale de rotor (9, 10, 18) d'une éolienne (1), laquelle est fixée par sa base (23) à un moyeu (8) d'un rotor (6), avec au moins un réflecteur (25) placé dans une cavité (24) de la pale de rotor (9, 10, 18), qui est couplé par l'intermédiaire d'un signal (29, 30) à un dispositif d'évaluation des signaux (28) placé à distance du réflecteur (25), à l'aide duquel sont déterminées et quantifiées à partir du signal réfléchi (30) les modifications physiques de la pale de rotor (9, 10, 18), **caractérisé par** un dispositif de nettoyage (34) pour le réflecteur (25), placé sur le réflecteur (25), qui est activable ou activé par le biais de la force centrifuge (36) s'exerçant lors de la rotation du rotor et nettoie le réflecteur (25), le dispositif de nettoyage (34) étant activable ou activé lorsque le moyeu (8) tourne lentement, et blocable ou bloqué lorsque le moyeu (8) tourne rapidement.

2. Dispositif à capteur selon revendication 1, **caractérisé en ce que** le dispositif de nettoyage (34) est activé à l'aide d'un dispositif d'activation (50), l'activation s'effectuant par augmentation de pression hydraulique ou pneumatique lorsque la force centrifuge (36) augmente,

3. Dispositif à capteur selon revendication 1 ou 2, **caractérisé en ce que** le dispositif de nettoyage (34) comporte un dispositif de pulvérisation (47) avec une cuve de réserve (48) remplie du produit de nettoyage (49), une unité d'activation (50) réagissant à la pression, une tuyauterie (51) pour le transport du produit de nettoyage (49) vers une buse de sortie (52) placée sur le capteur.

4. Dispositif à capteur selon une ou plusieurs des revendications précédentes, **caractérisé en ce que** le réflecteur (25) présente une surface réfléchissante (26) qui est essentiellement placée transversalement par rapport au parcours du signal (29, 30), et qui est nettoyée par le dispositif de nettoyage (34).

5. Dispositif à capteur selon une ou plusieurs des revendications précédentes, **caractérisé en ce que** le réflecteur (25) comporte, en direction du dispositif d'évaluation des signaux (28), un disque de protection (39) placé en amont de la surface réfléchissante (26) et n'influençant pas les signaux (29, 30), dont la surface (41) tournée en direction du dispositif d'évaluation des signaux (28) est nettoyée par le dispositif de nettoyage (34), le disque de protection (39) constituant avec la surface réfléchissante (26) un ensemble imperméable à l'air fixe, et le réflecteur (25) et le disque de protection (39) étant placés dans un boîtier (33).

6. Dispositif à capteur selon revendication 5, **caractérisé en ce que** le disque de protection (39) forme un recouvrement du boîtier (33) placé en direction du dispositif d'évaluation (28) et le dispositif de nettoyage (34) est placé sur la surface (41) du disque de protection (39) tournée en direction du dispositif d'évaluation (28).

7. Dispositif à capteur selon une ou plusieurs des revendications précédentes, **caractérisé en ce que** le disque de protection (39) est placé à l'opposé de la surface réfléchissante (26), dans un plan incliné et s'ouvrant en direction des parcours du signal (29, 30).

8. Dispositif à capteur selon une ou plusieurs des revendications précédentes, **caractérisé en ce que** le dispositif de nettoyage (34) comporte un dispositif d'essuyage (37) avec un bras d'essuyage (38) pouvant pivoter au-dessus de la surface réfléchissante (26, 41), qui est activable ou activé par le biais de la rotation (35) du moyeu de rotor (8).

9. Dispositif à capteur selon revendication 8, **caractérisé en ce que** le bras d'essuyage (38) présente une lèvre d'étanchéité (42) tournée en direction de la surface réfléchissante (26, 41), le bras d'essuyage (38) pouvant pivoter ou pivotant d'une position de départ vers une position d'essuyage (46) au-dessus de la surface réfléchissante (26, 41), et étant placé, dans la position de départ, sur un bord latéral (40) de la surface réfléchissante (26, 41).

10. Dispositif à capteur selon revendication 8 ou 9, **caractérisé en ce que** le bras d'essuyage (38) n'essuie que lorsque le moyeu (8) tourne lentement au-dessus de la surface réfléchissante (26, 41) et reste en position de départ lorsque le moyeu (8) tourne rapidement.

11. Dispositif à capteur selon une ou plusieurs des revendications 8 à 10, **caractérisé en ce que**, en présence d'une force centrifuge (36) importante s'exerçant sur le réflecteur (25), le bras d'essuyage (38) reste en position de départ et, à faible vitesse de rotation du rotor, l'essuyage s'effectue par le biais de la force de gravité (g) agissant sur le réflecteur à la suite de la rotation (35) de la pale de rotor.

12. Dispositif à capteur selon une ou plusieurs des revendications 8 à 11, **caractérisé en ce que** le bras d'essuyage (38) repose, dans sa position de départ, sur un bord latéral de la surface du disque de protection ou du boîtier (33) et qu'il pivote, dans la position d'essuyage (46), au-dessus de la surface du disque de protection (41).

13. Eolienne avec un rotor (6) pouvant tourner autour d'un axe du rotor (7) sous l'effet de la force du vent (15), qui comporte un moyeu de rotor (8) et au moins une pale de rotor (8, 9, 18) fixée sur le moyeu de rotor (8) et évoluant essentiellement, à partir de celui-ci, transversalement par rapport à l'axe du rotor (7), au moins un générateur électrique qui est mécaniquement couplé au rotor et qui peut être entraîné par celui-ci, **caractérisée par** un dispositif à capteur (31) selon une ou plusieurs des revendications précédentes.
